# EUROPEAN PATENT APPLICATION

(11) **EP 4 811 886 A1**
(43) Date of publication of application: **23.09.2026**
(21) Application number: 24895734.2
(22) Date of filing: 07.08.2024
(51) Int. Cl.: H04W 52/34

(54) **METHOD AND DEVICE FOR COMPENSATION OF POWER AMPLIFIER TRAPPING EFFECT**

(30) Priority: 29.11.2023 CN 202311628604
(71) Applicant: ZTE CORPORATION, Shenzhen, Guangdong 518057 (CN)
(72) Inventor: CAO, Jin, Shenzhen, Guangdong 518057 (CN); WEI, Yanzeng, Shenzhen, Guangdong 518057 (CN); GUO, Zelong, Shenzhen, Guangdong 518057 (CN)
(74) Representative: Deambrogi, Edgardo
(86) International application number: PCT/CN2024/110451
(87) International publication number: WO 2025/112631

(57) **Abstract**

Provided are a method and an apparatus for compensating a trapping effect of a power amplifier. The method includes: inserting a background carrier into a frequency domain position of a guard band of a working carrier to obtain an input signal; monitoring signal quality of an output signal at an output port of a transmission channel based on a background carrier; in response to the signal quality being unqualified, acquiring a traffic load of the working carrier; and adjusting, based on the traffic load of the working carrier, a transmission power of the background carrier to eliminate the trapping effect of the power amplifier. The present disclosure solves the problem in the related art that an input signal has a trapping effect of a power amplifier, thereby achieving the effect of improving the quality of an output signal.

## Description

### Cross-Reference to Related Application

The present disclosure is based on and claims the priority of Chinese Patent Application No. CN202311628604.6, filed on November 29, 2023 and entitled "Method and apparatus for compensating trapping effect of power amplifier", the disclosure of which is incorporated herein by reference in its entirety.

### Technical Field

Embodiments of the present disclosure relate to the technical field of communications, and in particular, to a method and an apparatus for compensating a trapping effect of a power amplifier.

### Background

In current communication devices, gallium nitride power amplifiers are widely used. However, due to their special materials and processes, gallium nitride power amplifiers exhibit a trapping effect during use, which is specifically manifested as distortion of an input signal, resulting in deterioration of information quality at the start and end portions of the signal. The specifically affected radio frequency index is signal modulation quality, i.e., EVM (Error Vector Magnitude).

Currently, some methods have been proposed to address similar problems, such as inserting dummy data at the start edge of the input signal. This approach provides some protection to the start portion of the signal but can only protect data in limited time intervals, and in practical operation, the input signal may not have idle periods available for inserting such protective data. Moreover, due to the complexity of signal characteristics, there remains no effective compensation method.

Therefore, there is an urgent need to solve the problem that an input signal entering a gallium nitride power amplifier has a trapping effect of the power amplifier.

### Summary

Embodiments of the present disclosure provide a method and an apparatus for compensating a trapping effect of a power amplifier, so as to at least solve the problem in the related art that an input signal has a trapping effect of a power amplifier.

According to one embodiment of the present disclosure, a method for compensating a trapping effect of a power amplifier is provided. The method includes:
inserting a background carrier into a frequency domain position of a guard band of a working carrier to obtain an input signal;
monitoring signal quality of an output signal at an output port of a transmission channel based on a background carrier;
in response to the signal quality being unqualified, acquiring a traffic load of the working carrier; and
adjusting, based on the traffic load of the working carrier, a transmission power of the background carrier to eliminate the trapping effect of the power amplifier.

According to another embodiment of the present disclosure, an apparatus for compensating a trapping effect of a power amplifier is provided. The apparatus includes:
a pre-processing module, configured to insert a background carrier into a frequency domain position of a guard band of a working carrier to obtain an input signal;
a measurement module, configured to monitor, based on the background carrier, signal quality of an output signal at an output port of a transmission channel;
an acquisition module, configured to acquire, in response to the signal quality being unqualified, a traffic load of the working carrier; and
a processing module, configured to adjust, based on the traffic load of the working carrier, a transmission power of the background carrier to eliminate the trapping effect of the power amplifier.

According to another embodiment of the present disclosure, a computer-readable storage medium is further provided. The computer-readable storage medium stores a computer program. The computer program is configured to, when being run, implement steps in any one of the above method embodiments.

According to yet another embodiment of the present disclosure, an electronic device is further provided and includes a memory and a processor. The memory stores a computer program. The processor is configured to run the computer program to execute steps in any one of the above method embodiments.

### Brief Description of the Drawings

FIG. 1 is a hardware structure block diagram of a mobile terminal for a method for compensating a trapping effect of a power amplifier according to an embodiment of the present disclosure.
FIG. 2 is a flowchart of a method for compensating a trapping effect of a power amplifier according to an embodiment of the present disclosure.
FIG. 3 is a flowchart of a method for monitoring signal quality of an output signal at an output port of a transmission channel based on a background carrier according to an embodiment of the present disclosure.
FIG. 4 is a flowchart of a method for obtaining a background carrier according to an embodiment of the present disclosure.
FIG. 5 is a flowchart of a method for generating a usage signal according to an embodiment of the present disclosure.
FIG. 6 is a flowchart of a method for determining signal quality according to an embodiment of the present disclosure.
FIG. 7 is a schematic diagram of a frequency domain position relationship between a background carrier and a working carrier according to an embodiment of the present disclosure.
FIG. 8 is a flowchart of a method for inserting a background carrier into a working carrier according to an embodiment of the present disclosure.
FIG. 9 is a schematic diagram of a time domain position of a transmission power of a working carrier according to an embodiment of the present disclosure.
FIG. 10 is a flowchart of a method for keeping time distributions of a background carrier and a working carrier synchronized according to an embodiment of the present disclosure.
FIG. 11 is a structural block diagram of an apparatus for compensating a trapping effect of a power amplifier according to an embodiment of the present disclosure.

### Detailed Description of the Embodiments

Hereinafter, embodiments of the present disclosure will be described in detail with reference to the drawings and in conjunction with the embodiments.

It should be noted that the terms "first", "second", etc. in the description, claims, and the above drawings of the present disclosure are used to distinguish similar objects, and are not necessarily used to describe a specific order or sequence.

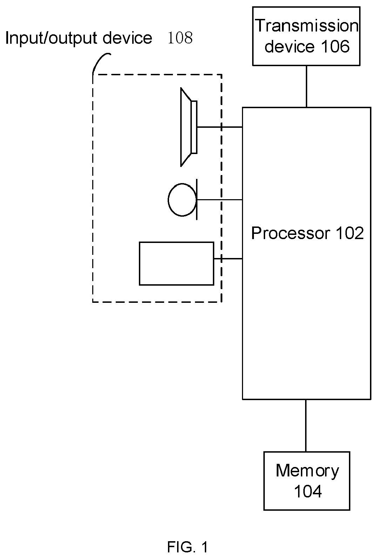

The method embodiments provided in the embodiments of the present disclosure can be executed in a mobile terminal, a computer terminal, or a similar computing device. Taking execution on a mobile terminal as an example, FIG. 1 is a hardware structure block diagram of a mobile terminal for a method for compensating a trapping effect of a power amplifier according to an embodiment of the present disclosure. As shown in FIG. 1, the mobile terminal may include one or more (only one is shown in FIG. 1) processors 102 (the processors 102 may include, but are not limited to, processing devices such as a microprocessor (MCU) or a programmable logic device (FPGA)) and a memory 104 for storing data, wherein the mobile terminal may further include a transmission device 106 for communication functions and an input/output device 108. Those of ordinary skill in the art can understand that the structure shown in FIG. 1 is merely illustrative and does not limit the structure of the mobile terminal. For example, the mobile terminal may also include more or fewer components than those shown in FIG. 1, or have a different configuration from that shown in FIG. 1.

The memory 104 may be used to store a computer program, for example, a software program and a module of application software, such as a computer program corresponding to the method for compensating a trapping effect of a power amplifier in an embodiment of the present disclosure. The processor 102 executes various functional applications and data processing, i.e., implements the above method, by running the computer program stored in the memory 104. The memory 104 may include a high-speed random access memory, and may also include a non-volatile memory, such as one or more magnetic storage devices, a flash memory, or other non-volatile solid-state memories. In some examples, the memory 104 may further include a memory remotely located relative to the processor 102, and these remote memories may be connected to the mobile terminal via a network. Examples of the above network include, but are not limited to, the Internet, intranets, local area networks, mobile communication networks, and combinations thereof.

The transmission device 106 is configured to receive or send data via a network. A specific example of the above network may include a wireless network provided by a communication provider of the mobile terminal. In one example, the transmission device 106 includes a network adapter (Network Interface Controller, NIC for short), which can be connected to other network devices via a base station to communicate with the Internet. In one example, the transmission device 106 may be a Radio Frequency (RF for short) module, which is configured to communicate with the Internet wirelessly.

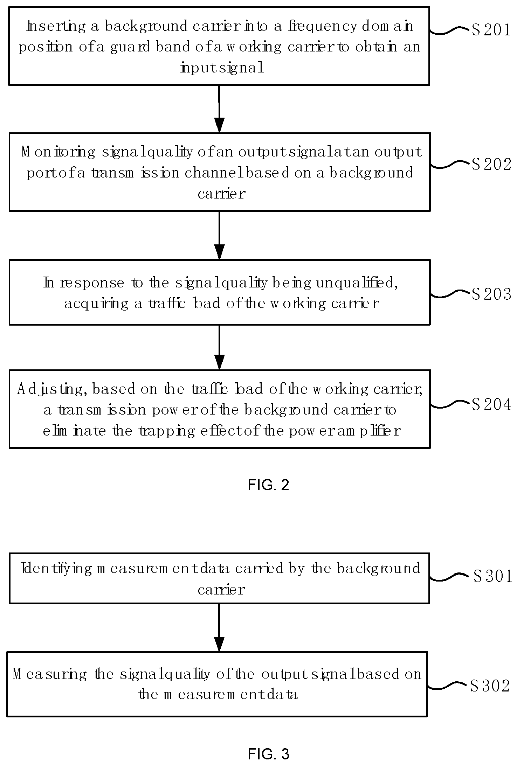

In the present embodiment, a method for compensating a trapping effect of a power amplifier is provided. FIG. 2 is a flowchart of a method for compensating a trapping effect of a power amplifier according to an embodiment of the present disclosure. As shown in FIG. 2, the process includes the following steps:
Step S201: inserting a background carrier into a frequency domain position of a guard band of a working carrier to obtain an input signal.

An input signal in the related art generally includes only a working carrier. After the input signal in the related art is input into a transmission channel of a power amplifier of a radio frequency unit, the input signal is susceptible to the trapping effect of the power amplifier, thereby deteriorating the quality of an output signal output. To solve this problem, through step S201, the following effects can be achieved:
Protecting a start portion of a signal: the trapping effect of the power amplifier usually causes signal distortion, especially deterioration of the quality of the start portion of the signal. By inserting a background carrier into the frequency domain position of the guard band, certain protection can be provided at the start portion of the signal, reducing the occurrence of distortion.

Improving signal quality: the insertion of the background carrier can compensate, to a certain extent, for the distortion caused by the trapping effect of the power amplifier, thereby improving the quality of the output signal. The presence of the background carrier can offset or reduce signal distortion caused by the trapping effect, thereby improving signal modulation quality.

By inserting the background carrier, the start portion of the signal can be protected and signal quality can be improved, thereby ameliorating the problem caused by the trapping effect of the power amplifier. This ensures the integrity and accuracy of the signal during transmission, and improves the performance and reliability of the communication device.

Step S202: monitoring signal quality of an output signal at an output port of a transmission channel based on a background carrier.

In an exemplary implementation, the traffic load of the working carrier may be acquired by the following method:
Sampling and measurement: a suitable measurement device or sensor is used to sample and measure the working carrier at the output port of the transmission channel. An appropriate power probe, power sensor, power meter, or other device may be selected and connected to the output port of the transmission channel to measure the power level of the working carrier.

Power detection and analysis: the sampled working carrier is input into a power detection device, and the power value of the working carrier is acquired by performing power detection and analysis on the working carrier. A power meter, a power analyzer, a spectrum analyzer, or other device may be used. By performing power analysis on the frequency range of the working carrier, the power spectral density or spectrogram of the working carrier can be obtained, from which the load condition of the working carrier can be inferred.

Step S203: in response to the signal quality being unqualified, acquiring a traffic load of the working carrier.

Through step S202 and step S203, the following effects can be achieved:
Real-time monitoring of signal quality: by monitoring the output signal at the output port of the transmission channel, quality information of the signal can be acquired in real time. This allows timely detection of unqualified signal quality and targeted adjustment and optimization.

Early warning and problem resolution: when the signal quality is unqualified, it indicates a problem with the transmission channel, which may lead to signal distortion or the trapping effect. By acquiring the traffic load of the working carrier, the problem can be quickly located and corrective measures can be taken, thereby resolving the problem in a timely manner and avoiding further impact on signal quality and transmission performance.

Improving system stability and reliability: by continuously monitoring the signal quality and acquiring the traffic load, timely maintenance and optimization measures can be implemented to ensure that the system operates in a stable and reliable state. This reduces the occurrence of signal quality problems and improves the stability and reliability of the system.

In summary, monitoring signal quality based on the background carrier and acquiring the traffic load of the working carrier can achieve the effects of real-time monitoring, early warning and problem resolution, and improving system stability and reliability. These effects can enhance the performance of the communication device and ensure normal signal transmission and reception.

Step S204: adjusting, based on the traffic load of the working carrier, a transmission power of the background carrier to eliminate the trapping effect of the power amplifier.

Through step S204, the following effects can be achieved:
Reducing the trapping effect of the power amplifier: the trapping effect of the power amplifier refers to the nonlinear distortion problem caused by the power amplifier device during signal amplification. By adjusting the transmission power of the background carrier, the operating state of the power amplifier device can be appropriately configured according to the traffic load of the working carrier, thereby reducing the occurrence of the trapping effect of the power amplifier and thus reducing nonlinear distortion.

Improving signal quality: the nonlinear distortion caused by the trapping effect of the power amplifier may lead to degradation of signal quality, for example, distortion of the start portion of the signal caused by the trapping effect. By adjusting the transmission power of the background carrier, the nonlinear distortion problem of the input signal caused by the trapping effect of the power amplifier can be eliminated or reduced, thereby improving the quality and accuracy of the output signal.

Optimizing transmission performance: the impact of the trapping effect of the power amplifier on signal transmission may lead to degradation of transmission performance, such as reduced signal fidelity or reduced anti-interference performance. By appropriately adjusting the transmission power of the background carrier, the trapping effect of the power amplifier can be effectively eliminated, thereby optimizing transmission performance and improving indicators such as anti-interference performance and bandwidth utilization of the signal.

By adjusting the transmission power of the background carrier based on the traffic load of the working carrier, the technical effects of reducing the trapping effect of the power amplifier, improving signal quality, and optimizing transmission performance can be achieved. This improves the performance of the communication device and enhances the stability and reliability of signal transmission.

Through steps S201 to S204, a new input signal is formed by inserting the background carrier into the working carrier of the input signal, and the trapping effect of the power amplifier in the transmission channel is eliminated by adjusting the transmission power of the background carrier, thereby improving the quality of the output signal. Therefore, the problem in the related art that an input signal has the trapping effect of the power amplifier is solved, and the effect of improving the quality of an output signal is achieved.

In an exemplary implementation, the transmission power of the background carrier may be adjusted by the following method:
in response to the signal quality being lower than a preset signal threshold, calculating a current power of the background carrier;
increasing the current power of the background carrier so that the signal quality meets the preset signal threshold.

The manner of obtaining a specific value for increasing the current power of the background carrier is as follows:
Assume that the specific value for increasing the current power of the background carrier is X, and the calculation manner of the specific value X is:
acquiring an average working power of the working carrier within a preset time period;
acquiring a minimum working power of the working carrier when there is no traffic and a maximum working power of the working carrier when there is full traffic;
acquiring a minimum power of the background carrier;
obtaining the current power of the background carrier based on the average working power, the minimum working power, the maximum working power, and the minimum power;
acquiring a current power of the working carrier in the transmission channel;
obtaining a current total power of the signal based on the current power of the background carrier and the current power of the working carrier;
acquiring a preset signal power corresponding to the preset signal threshold, wherein a mapping relationship is established between the preset signal threshold and the preset signal power;
obtaining a theoretical power of the background carrier after adjustment based on the preset signal power and the current total power of the signal;
obtaining the specific value X based on the current power of the background carrier and the theoretical power.

The current power *P_{current}* of the background carrier is calculated through the following formula: ${P}_{current} = {P}_{min} + C * \left(\frac{s - {R}_{min}}{{R}_{max} - {R}_{min}}\right) ;$ where *Pₘᵢₙ* is the minimum power of the background carrier, S is the average power of the working carrier within the preset time period, and *R*ₘᵢₙ ≤ *s* ≤ *R*ₘₐₓ , Rmin is the minimum working power of the working carrier when there is no traffic, Rmax is the maximum working power of the working carrier when there is full traffic; C is an adjustment factor, and the calculation formula thereof is C=*Pₘₐₓ* - *Pₘᵢₙ*; *Bₘₐₓ* is the maximum transmission power allowed for the background carrier in the transmission channel; then $X = {P}_{new} - {P}_{current} ,$ where *B_{new}* is the power of the background carrier obtained at the output port of the transmission channel.

FIG. 3 is a flowchart of a method for monitoring signal quality of an output signal at an output port of a transmission channel based on a background carrier according to an embodiment of the present disclosure. In an implementation, as shown in FIG. 3, the monitoring signal quality of an output signal at an output port of a transmission channel based on a background carrier includes:
Step S301: identifying measurement data carried by the background carrier.

In an exemplary implementation, the identification may be implemented by the following manner:
Analyzing a carrier modulation scheme: for example, Frequency Shift Keying (FSK), Phase Shift Keying (PSK), Quadrature Amplitude Modulation (QAM), etc., may be used.

Demodulating a signal: demodulating the received background carrier signal to recover an original modulated signal. For example, a Frequency Shift Keying demodulator, a phase difference demodulator, etc., may be used.

Extracting measurement data: extracting the measurement data carried by the background carrier from the demodulated signal. This may involve steps such as parsing a data frame structure, processing timing, and checking error. The specific method depends on the format of the data and the transmission characteristics, and is not limited herein.

Data processing and parsing: processing and parsing the extracted measurement data, and performing corresponding operations according to the meaning and format of the specific data. The analysis, extraction, or transformation of the measurement data may be accomplished by a data processing algorithm, a parser, or a custom processing program.

Result output or application: performing corresponding output or application according to the identified and processed measurement data. For example, operations such as displaying, storing, transmitting, and analyzing the data may be included.

In summary, to identify the measurement data carried by the background carrier, it is necessary to analyze the modulation scheme of the background carrier, demodulate the signal, extract the measurement data, perform data processing and parsing, and finally output the application result.

Step S302: measuring the signal quality of the output signal based on the measurement data.

In an exemplary implementation, the measurement may be implemented by the following manner:
Selecting a signal quality measurement index: first, a suitable signal quality measurement index needs to be selected. The index may include Bit Error Rate (BER), Signal-to-Noise Ratio (SNR), Symbol Error Rate (SER), etc.

Extracting measurement data: extracting data to be measured from the output signal, which may be selected according to specific signal characteristics and measurement purposes. For example, in digital communications, a bit stream or a sample sequence at a receiving end may be extracted.

Analyzing measurement data: analyzing and processing the extracted measurement data, and calculating a corresponding signal quality index. According to the selected index, the data needs to be processed accordingly, such as statistical analysis, algorithm calculation, etc.

Calculating a signal quality index: applying the selected data processing method to calculate the value of the selected index. For example, to calculate the bit error rate, the number of received erroneous bits may be counted and divided by the total number of bits; to calculate the signal-to-noise ratio, the ratio of signal power to noise power may be used.

In an exemplary implementation, after calculating the signal quality index, the method further includes: result output and analysis: outputting a result of the signal quality according to the calculated signal quality index. The result of the signal quality may be qualified or unqualified. For example, the signal quality index may be presented in numerical form, or visual analysis may be performed, such as generating a chart, a report, etc., to indicate whether the signal quality result is qualified or unqualified.

In summary, measuring the signal quality of the output signal based on the measurement data requires selecting a suitable signal quality index, extracting measurement data, analyzing the measurement data, calculating the signal quality index, and finally outputting and analyzing the result.

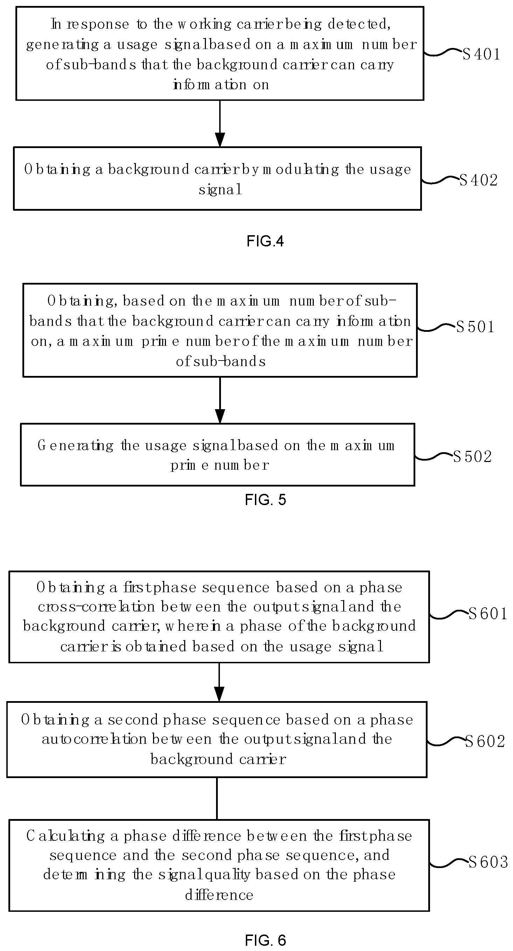

FIG. 4 is a flowchart of a method for obtaining a background carrier according to an embodiment of the present disclosure. In an implementation, as shown in FIG. 4, before the inserting a background carrier into a frequency domain position of a guard band of a working carrier to obtain an input signal, the method further includes:
Step S401: in response to the working carrier being detected, generating a usage signal based on a maximum number of sub-bands that the background carrier can carry information on.

In an exemplary implementation, obtaining, based on the maximum number of sub-bands that the background carrier can carry information on, a maximum prime number of the maximum number of sub-bands. The number and indices of usage signals to be generated are determined. The index of a usage signal is divided by the maximum prime number, and the remainder is used as an index of a digital signal. A complex operation is performed using the index of the digital signal and the maximum prime number to obtain the digital signal. Within the range of the maximum number of sub-bands that the background carrier can carry information on, an index of each usage signal being an integer value is determined, a signal value corresponding to the index of the usage signal is found in the digital signal, and the value of the digital signal is assigned to the usage signal to convert a continuous digital signal into discrete usage signals.

Step S402: obtaining a background carrier by modulating the usage signal.

In an exemplary implementation, the obtained multiple usage signals are accumulated to obtain an accumulated value, and the accumulated value is subjected to D/A modulation to obtain the background carrier.

FIG. 5 is a flowchart of a method for generating a usage signal according to an embodiment of the present disclosure. In an implementation, as shown in FIG. 5, generating, the in response to the working carrier being detected, generating a usage signal based on a maximum number of sub-bands that the background carrier can carry information on includes:
Step S501: obtaining, based on the maximum number of sub-bands that the background carrier can carry information on, a maximum prime number of the maximum number of sub-bands.

Step S502: generating the usage signal based on the maximum prime number.

In an exemplary implementation, the usage signal *r*(*n*) is generated using the following formula: $r \left(n\right) = x \left(m\right) , 0 \leq n \leq M ; x \left(m\right) = exp \left(-j\frac{πm \left(m+1\right)}{{N}_{sc}}\right) ; 0 \leq m \leq {N}_{sc} ; m = n mod {N}_{sc} ;$
where x(m) is a digital signal, which is a continuous value; the usage signal *r*(*n*) is a discrete value obtained by performing sampling on x(m); n is an index of a sub-band in the usage signal; M is the maximum number of sub-bands that the background carrier can carry information on; and *N_{SC}* is the maximum prime number less than M;
wherein the background carrier uses the following formula: $f \left(n\right) = r \left(1\right) + r \left(2\right) + ⋯ + r \left(n\right) = {\sum }_{k = 0}^{K - 1} r \left(k\right) ∗ {e}^{j 2 π \frac{kn}{K}} ,$ and f(n) is subjected to D/A modulation to obtain the background carrier;
wherein K is the number of information sampling points per unit time slice of the working carrier.

FIG. 6 is a flowchart of a method for determining signal quality according to an embodiment of the present disclosure. In an implementation, as shown in FIG. 6, monitoring signal quality of an output signal at an output port of a transmission channel based on a background carrier includes:
Step S601: obtaining a first phase sequence based on a phase cross-correlation between the output signal and the background carrier, wherein a phase of the background carrier is obtained based on the usage signal.

In an exemplary implementation, the phase cross-correlation between the output signal and the background carrier is a method for analyzing a phase difference between two signals. The phase cross-correlation can provide information about a relative time delay or phase offset between the signals.

The phase cross-correlation between the output signal and the background carrier may be calculated by the following method:
1. Performing Fourier transform on the output signal and the background carrier (e.g., the background carrier may utilize the usage signal) to obtain transform results, so as to convert the output signal and the background carrier from the time domain to the frequency domain. For example, a transform result is obtained by performing Fourier transform on the usage signal. By observing a frequency spectrum of the transform result, frequency domain components and phase information of the usage signal can be determined, and the phase of the background carrier is obtained.
2. Taking complex conjugates of the transform results to obtain two spectrum results.
3. Multiplying the two spectrum results to obtain a conversion result.
4. Performing inverse Fourier transform on the conversion result to recover the conversion result from the frequency domain to the time domain, thereby obtaining the phase cross-correlation.

The result of the phase cross-correlation is a complex sequence, which can be expressed in the form of amplitude and phase. The phase information reflects the relative phase offset between the signals. The phase information can be extracted to obtain a phase sequence, which describes the change over time of the phase difference between the output signal and the background carrier. To obtain the phase sequence, an angle-finding function for complex numbers (e.g., the arctan function) may be used to calculate the angle of each complex number, and a graph of the phase sequence may be obtained with time as the horizontal axis and the phase as the vertical axis. This graph can show the change over time of the phase difference between the signals.

Step S602: obtaining a second phase sequence based on a phase autocorrelation between the output signal and the background carrier.

The phase autocorrelation between the output signal and the background carrier refers to the correlation between the phases of the two signals under different time delays. The phase autocorrelation can be obtained by performing Fourier transform on the output signal and the background carrier, then multiplying their amplitudes and phases, and finally performing inverse Fourier transform.

Based on the phase autocorrelation, a second phase sequence can be obtained. The specific method is to perform Fourier transform on the output signal and the background carrier to obtain their frequency spectra, then multiply the amplitudes and phases of the frequency spectra, and finally perform inverse Fourier transform to obtain the second phase sequence. The second phase sequence represents the phase correlation between the output signal and the background carrier under different time delays.

Step S603: calculating a phase difference between the first phase sequence and the second phase sequence, and determining the signal quality based on the phase difference.

In an exemplary implementation, for example, the output signal at the output port of the power amplifier is *Y*(*n*)*,* and the following transformation is performed to obtain *Y'*(*k*): $Y ′ \left(k\right) = {\sum }_{n = 0}^{N - 1} Y \left(n\right) * {e}^{- j \frac{2 πkn}{N}} , k = 0 , 1 , 2 ⋯ N - 1 ,$ where N is the number of sampling points.

The following phase cross-correlation operation is performed between the background carrier *r*(*n*) and the output signal *Y'*(*k*) to obtain a first phase sequence *Z*'(*n*): $Z ′ \left(n\right) = {\sum }_{m = 0}^{N - 1} angel \left(r\left(n\right)\right) * angel \left(Y′\left(n+m\right)\right) ,$ where *angel* is an operation of obtaining an angle of a complex number.

The following phase autocorrelation calculation is performed between the background carrier *r*(*n*) and the output signal *Y'*(*k*) to obtain a second phase sequence *R'*(*n*): $R ′ \left(n\right) = {\sum }_{m = 0}^{N - 1} angel \left(r\left(n\right)\right) * angel \left(r\left(n+m\right)\right) .$

Positive numbers are extracted from each of the first phase sequence *Z*'(*n*) and the second phase sequence *R'*(*n*), denoted as *Z"*(*n*), *R*"(*n*) respectively. Then, after respectively averaging them, a difference is calculated to obtain a phase difference D_{diff}: ${D}_{diff} = \frac{\sum Z " \left(n\right)}{{N}_{1}} - \frac{\sum R " \left(n\right)}{{N}_{2}} .$

The phase difference D_{diff} is compared with a standard phase difference D. If the difference between D_{diff} and D exceeds a preset threshold, it can be determined that the output signal is unqualified. The standard phase difference D and the preset threshold are selected according to specific circumstances, and are not limited herein.

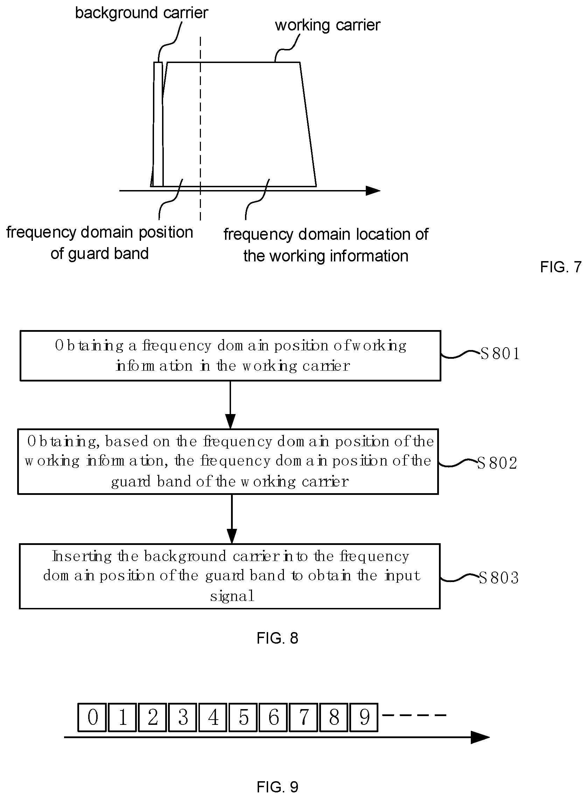

FIG. 7 is a schematic diagram of a frequency domain position relationship between a background carrier and a working carrier according to an embodiment of the present disclosure. In an exemplary implementation, the position of the background carrier may be at an edge of the working carrier, specifically on the left or right side. It is necessary to consider the frequency domain position of working information carried in the working carrier (e.g., synchronization information, etc.), and the background carrier should be kept away from the frequency domain position where such working information is located. That is, the frequency domain position of the guard band of the working carrier is on the side away from the frequency domain position of the working information, and the background carrier is inserted at the frequency domain position of the guard band of the working carrier. As shown in FIG. 7, for example, when the frequency domain position of the working information carried in the working carrier (e.g., synchronization information, etc.) is on the right side, the frequency domain position of the guard band is on the left side, and the background carrier can be inserted on the left side of the working carrier. Therefore, inserting the background carrier into the frequency domain position of the guard band of the working carrier can enhance the protection performance of the working carrier and improve its anti-interference capability and stability.

FIG. 8 is a flowchart of a method for inserting a background carrier into a working carrier according to an embodiment of the present disclosure. In an implementation, as shown in FIG. 8, the inserting a background carrier into a frequency domain position of a guard band of a working carrier to obtain an input signal includes:
Step S801: obtaining a frequency domain position of working information in the working carrier.

In an exemplary implementation, the following method is adopted:
1. Collecting time domain data of the working information, which may be real-time data acquired by sensors, instruments, or other devices.
2. Performing Fourier transform on the time domain data to convert it into frequency domain data.
3. Analyzing the frequency domain data to determine the frequency domain position of the working information. The frequency components and energy distribution of the signal can be determined by methods such as spectrum analysis and power spectral density analysis.
4. Outputting relevant information of the frequency domain data, including frequency components, energy distribution, etc.

Through the above method, the frequency domain position of the working information can be determined, providing input data for subsequent steps.

Step S802: obtaining, based on the frequency domain position of the working information, the frequency domain position of the guard band of the working carrier.

In an exemplary implementation, the following method is adopted:
1. Collecting the frequency domain position of the working information, including the frequency range and signal characteristics of the working carrier.
2. Determining, based on the frequency domain position of the working information, the frequency domain position of the guard band of the working carrier. The guard band is typically within a certain range above and below the frequency of the working carrier to reduce the influence of surrounding interference signals and noise.
3. Using a digital signal processing algorithm or a spectrum analysis technique to process the frequency domain position of the working information to determine the frequency domain position of the guard band of the working carrier.
4. After determining the frequency domain position of the guard band, appropriate signal processing and modulation techniques may be adopted to ensure reliable transmission and anti-interference capability of the working carrier at the frequency domain position.

Through the above method, the frequency domain position of the guard band can be determined, preparing for the subsequent insertion of the background carrier.

Step S803: inserting the background carrier into the frequency domain position of the guard band to obtain the input signal.

In an exemplary implementation, the following method is adopted:
1. Determining the frequency range of the working carrier: determining the frequency range of the working carrier, including the main carrier and the frequency domain position of the guard band.
2. Inserting the generated background carrier into the frequency domain position of the guard band: using a digital signal processing technique to insert the background carrier signal into the frequency domain position of the guard band of the working carrier. This can be implemented by techniques such as a frequency domain filter or a mixer.
3. Outputting the input signal: outputting the obtained signal, i.e., obtaining the input signal in which the background carrier is inserted into the frequency domain position of the guard band of the working carrier.

Through the above method, it is possible to insert the background carrier into the frequency domain position of the guard band of the working carrier, thereby obtaining the input signal. This can protect and enhance the input signal, improving the reliability and stability of the signal.

FIG. 9 is a schematic diagram of a time domain position of a transmission power of a working carrier according to an embodiment of the present disclosure. As shown in FIG. 9, in an exemplary implementation, the occupation of time resources by the background carrier needs to be determined according to the time resource distribution of the actual working carrier. For example, the working carrier divides time into multiple slices, for example, into 10 time slices from 0 to 9. If the transmission power of the working carrier occupies time slices 0 to 3 in FIG. 9, then the background carrier transmits power at time slices 0 to 3 so as to be completely synchronized with the time distribution of the working carrier. Alternatively, the working carrier may also divide time into other numbers of time slices, which can be adjusted according to actual circumstances and will not be further described herein.

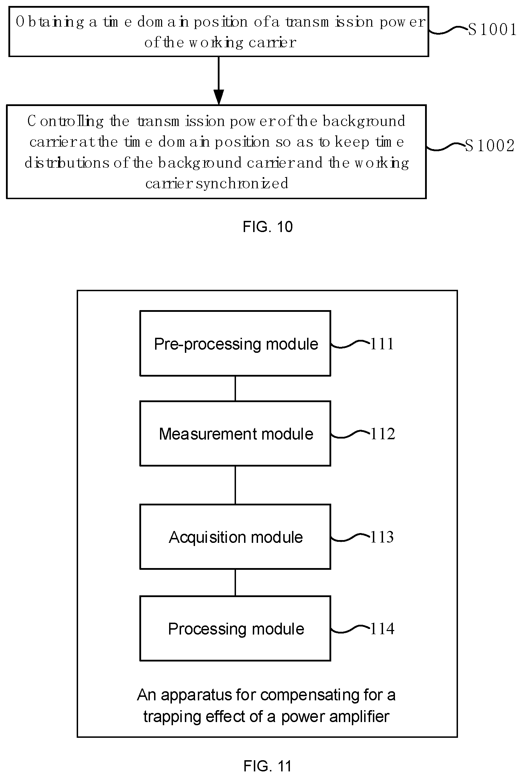

FIG. 10 is a flowchart of a method for keeping time distributions of a background carrier and a working carrier synchronized according to an embodiment of the present disclosure. In an implementation, as shown in FIG. 10, the method further includes:
Step S1001: obtaining a time domain position of a transmission power of the working carrier.

In an exemplary implementation, the following method is adopted:
1. Using a power detection instrument to monitor the transmission power of the working carrier. The power detection instrument may be a power meter, a power analyzer, a spectrum analyzer, or other device.
2. Determining the time domain position of the monitored transmission power of the working carrier. This can be determined by a display screen on the power detection instrument or by recorded data.
3. Analyzing the monitored transmission power data to determine a specific time domain position of the working carrier. This can be achieved by performing time domain analysis or waveform analysis on the power data.
4. Determining, based on the analysis result, the time domain position of the transmission power of the working carrier. This may be a time period or a specific moment, representing the specific time domain position of the transmission power of the working carrier.

Through the above method, the following effects can be achieved:
1. Ensuring that the transmission power of the working carrier complies with prescribed standards and requirements, thereby guaranteeing communication quality and device performance.
2. Timely detecting abnormal conditions of the transmission power of the working carrier, making adjustments and corrections to avoid adverse effects on the communication system and the surrounding environment.
3. Providing data support for engineers and technicians, helping them optimize and improve the communication system, and improving system performance and reliability.
4. Ensuring safe and stable operation of the communication system, reducing the occurrence of faults and unexpected events, and improving the reliability and sustainability of the system.

Step S1002: controlling the transmission power of the background carrier at the time domain position so as to keep time distributions of the background carrier and the working carrier synchronized.

In an exemplary implementation, the following method is adopted:
1. Understanding the time domain position and transmission power of the working carrier. This can be obtained through system parameter configuration or measurement.
2. Adjusting the transmission power of the background carrier so that its time domain position is consistent with that of the working carrier. This can be performed by a system control panel or software.
3. During the adjustment process, monitoring the time domain positions of the background carrier and the working carrier in real time to ensure that they keep synchronized. This can be achieved by a signal analyzer or other related equipment.
4. After the adjustment is completed, performing verification and testing to ensure that the time distributions of the background carrier and the working carrier keep synchronized to meet system requirements.
5. Recording and documenting for future maintenance and management. At the same time, regular inspection and adjustment are also required to ensure that the background carrier and the working carrier keep synchronized at all times.

Through the above method, the following technical effects can be achieved:
1. Improving the overall performance of the system: by keeping the time distributions of the background carrier and the working carrier synchronized, interference and signal collision can be reduced, thereby improving the overall performance and reliability of the system.
2. Improving signal coverage: dynamically adjusting the transmission power of the background carrier enables the time distribution of the background carrier to remain synchronized with that of the working carrier under different geographic locations and channel conditions, thereby improving the coverage and accessibility of the signal.
3. Saving energy: dynamically adjusting the transmission power of the background carrier allows precise control according to actual needs, avoiding unnecessary energy waste, thereby saving energy and extending the working life of the device.

Through the description of the above implementations, those skilled in the art can clearly understand that the method according to the above embodiments can be implemented by means of software plus a necessary general hardware platform, and certainly can also be implemented by hardware, but in many cases the former is a better implementation. Based on such an understanding, the technical solution of the present disclosure, in essence, or the part contributing to the prior art, may be embodied in the form of a software product. The computer software product is stored in a storage medium (such as a ROM, RAM, magnetic disk, or optical disk), and includes several instructions for enabling a terminal device (which may be a mobile phone, a computer, a server, or a network device, etc.) to execute the methods described in the various embodiments of the present disclosure.

In this embodiment, an apparatus for compensating for a trapping effect of a power amplifier is further provided. The apparatus is configured to implement the above embodiments and preferred implementations, and details already described will not be repeated. The term "module" as used below may be a combination of software and/or hardware that implements a predetermined function. Although the apparatus described in the following embodiments is preferably implemented in software, implementation in hardware, or a combination of software and hardware, is also possible and contemplated.

FIG. 11 is a structural block diagram of an apparatus for compensating for a trapping effect of a power amplifier according to an embodiment of the present disclosure. As shown in FIG. 11, the apparatus includes:
a pre-processing module 111, configured to insert a background carrier into a frequency domain position of a guard band of a working carrier to obtain an input signal;
a measurement module 112, configured to monitor, based on the background carrier, signal quality of an output signal at an output port of a transmission channel;
an acquisition module 113, configured to acquire, in response to the signal quality being unqualified, a traffic load of the working carrier; and
a processing module 114, configured to adjust, based on the traffic load of the working carrier, a transmission power of the background carrier to eliminate the trapping effect of the power amplifier.

Further, the apparatus is further configured to:
identify measurement data carried by the background carrier; and
measure the signal quality of the output signal based on the measurement data.

Further, the apparatus is further configured to:
in response to the working carrier being detected, generate a usage signal based on a maximum number of sub-bands that the background carrier can carry information on; and
obtain a background carrier by modulating the usage signal.

Further, the apparatus is further configured to:
obtain a first phase sequence based on a phase cross-correlation between the output signal and the background carrier, wherein a phase of the background carrier is obtained based on the usage signal;
obtain a second phase sequence based on a phase autocorrelation between the output signal and the background carrier; and
calculate a phase difference between the first phase sequence and the second phase sequence, and determine the signal quality based on the phase difference.

Further, the apparatus is further configured to:
obtain, based on the maximum number of sub-bands that the background carrier can carry information on, a maximum prime number less than the maximum number of sub-bands; and
generate the usage signal based on the maximum prime number.

Further, the apparatus is further configured to:
obtain a frequency domain position of working information in the working carrier;
obtain, based on the frequency domain position of the working information, the frequency domain position of the guard band of the working carrier; and
insert the background carrier into the frequency domain position of the guard band to obtain the input signal.

Further, the apparatus is further configured to:
obtain a time domain position of a transmission power of the working carrier; and
control the transmission power of the background carrier at the time domain position so as to keep time distributions of the background carrier and the working carrier synchronized.

It should be noted that each of the above modules may be implemented by software or hardware. For the latter, implementation may be achieved by the following means, but is not limited thereto: all of the above modules are located in the same processor; or, the above modules are respectively located in different processors in any combination.

Embodiments of the present disclosure further provide a computer-readable storage medium. The computer-readable storage medium has a computer program stored therein, wherein the computer program is configured to, when being executed, implement steps of the method according to any one of the above method embodiments.

In an exemplary embodiment, the above computer-readable storage medium may include, but is not limited to, any medium that can store a computer program, such as a USB flash drive, a Read-Only Memory (ROM), a Random Access Memory (RAM), a removable hard disk, a magnetic disk, or an optical disk.

Embodiments of the present disclosure further provide an electronic device, including a memory and a processor. The memory stores a computer program, and the processor is configured to execute the computer program to perform steps of the method according to any one of the above method embodiments.

In an exemplary embodiment, the above electronic device may further include a transmission device and an input/output device, wherein the transmission device is connected to the processor, and the input/output device is connected to the processor.

For specific examples in this embodiment, reference may be made to the examples described in the above embodiments and exemplary implementations, and details are not repeatedly described in this embodiment.

Obviously, those skilled in the art should understand that each module or each step of the present disclosure as described above may be implemented by a universal computing device. They may be centralized on a single computing device or distributed on a network composed of a plurality of computing devices. They may be implemented by program codes executable by a computing device, and thus may be stored in a storage device and executed by the computing device. In some cases, the steps shown or described may be executed in an order different from that described here, or they may be respectively fabricated into individual integrated circuit modules, or a plurality of modules or steps thereof may be fabricated into a single integrated circuit module for implementation. As such, the present disclosure is not limited to any specific combination of hardware and software.

The above descriptions are merely preferred embodiments of the present disclosure and are not intended to limit the present disclosure. For those skilled in the art, the present disclosure may have various modifications and changes. Any modifications, equivalent substitutions, improvements, etc., made within the principles of the present disclosure shall be included within the scope of protection of the present disclosure.

## Claims

1. A method for compensating a trapping effect of a power amplifier, comprising:
inserting a background carrier into a frequency domain position of a guard band of a working carrier to obtain an input signal;
monitoring signal quality of an output signal at an output port of a transmission channel based on a background carrier;
in response to the signal quality being unqualified, acquiring a traffic load of the working carrier; and
adjusting, based on the traffic load of the working carrier, a transmission power of the background carrier to eliminate the trapping effect of the power amplifier.

2. The method according to claim 1, wherein the monitoring signal quality of an output signal at an output port of a transmission channel based on a background carrier comprises:
identifying measurement data carried by the background carrier; and
measuring the signal quality of the output signal based on the measurement data.

3. The method according to claim 2, wherein before the inserting a background carrier into a frequency domain position of a guard band of a working carrier to obtain an input signal, the method further comprises:
in response to the working carrier being detected, generating a usage signal based on a maximum number of sub-bands that the background carrier can carry information on; and
modulating the usage signal to obtain the background carrier.

4. The method according to claim 3, wherein the monitoring signal quality of an output signal at an output port of a transmission channel based on a background carrier comprises:
obtaining a first phase sequence based on a phase cross-correlation between the output signal and the background carrier, wherein a phase of the background carrier is obtained based on the usage signal;
obtaining a second phase sequence based on a phase autocorrelation between the output signal and the background carrier; and
calculating a phase difference between the first phase sequence and the second phase sequence, and determining the signal quality based on the phase difference.

5. The method according to claim 3, wherein the in response to the working carrier being detected, generating a usage signal based on a maximum number of sub-bands that the background carrier can carry information on comprises:
obtaining, based on the maximum number of sub-bands that the background carrier can carry information on, a maximum prime number of the maximum number of sub-bands; and
generating the usage signal based on the maximum prime number.

6. The method according to claim 1, wherein the inserting a background carrier into a frequency domain position of a guard band of a working carrier to obtain an input signal comprises:
obtaining a frequency domain position of working information in the working carrier;
obtaining, based on the frequency domain position of the working information, the frequency domain position of the guard band of the working carrier; and
inserting the background carrier into the frequency domain position of the guard band to obtain the input signal.

7. The method according to claim 1, further comprising:
obtaining a time domain position of a transmission power of the working carrier; and
controlling the transmission power of the background carrier at the time domain position so as to keep time distributions of the background carrier and the working carrier synchronized.

8. An apparatus for compensating a trapping effect of a power amplifier, comprising:
a pre-processing module, configured to insert a background carrier into a frequency domain position of a guard band of a working carrier to obtain an input signal;
a measurement module, configured to monitor, based on the background carrier, signal quality of an output signal at an output port of a transmission channel;
an acquisition module, configured to acquire, in response to the signal quality being unqualified, a traffic load of the working carrier; and
a processing module, configured to adjust, based on the traffic load of the working carrier, a transmission power of the background carrier to eliminate the trapping effect of the power amplifier.

9. A computer-readable storage medium, having a computer program stored therein, wherein the computer program is configured to, when being executed by a processor, implement steps of the method according to any one of claims 1 to 7.

10. An electronic device, comprising a memory, a processor, and a computer program stored in the memory and executable by the processor, wherein the processor is configured to, when executing the computer program, implement steps of the method according to any one of claims 1 to 7.
